# DEMANDE DE BREVET EUROPEEN

(11) **EP 2 990 264 A2**
(43) Date de publication de la demande: **02.03.2016**
(21) Numéro de dépôt: 15179689.3
(22) Date de dépôt: 04.08.2015
(51) Int. Cl.: B60Q 1/14, F21S 8/10, F21V 14/04

(54) **PROCEDE DE CONTRÔLE D'UN FAISCEAU LUMINEUX ET MODULE D'ECLAIRAGE ET/OU DE SIGNALISATION CORRESPONDANT**

(30) Priorité: 29.08.2014 FR 1458135
(71) Demandeur: VALEO VISION, 93012 Bobigny Cedex (FR)
(72) Inventeur: GODBILLON, Vincent, 75011 Paris (FR); ALBOU, Pierre, 75013 Paris (FR); PUENTE, Jean-Claude, 93190 Livry Gargan (FR)

(57) **Abrégé**

Un procédé de contrôle d'un faisceau lumineux global (28) émis par un projecteur de véhicule automobile et formé de portions de faisceaux (36) activables sélectivement, comporte différentes étapes parmi lesquelles : la détection d'un véhicule tiers susceptible d'être ébloui ; la détermination d'une zone cible (30) dans ledit faisceau global incluant ledit véhicule tiers ; l'identification de moyens d'éclairage réalisant les portions de faisceaux assurant l'éclairage de ladite zone cible (30) ; et le pilotage en déplacement de ces moyens d'éclairage, de manière à créer une zone de moindre éclairage correspondant à ladite zone cible (30), tout en maintenant allumés lesdits moyens d'éclairage. Un module lumineux pour la mise en oeuvre de ce procédé comporte une source de lumière (4) et un système optique (8) pour l'émission d'un faisceau lumineux, et des moyens de déviation optique (6) intercalés entre les deux, lesdits moyens de déviation optique (6) étant montés mobiles.

## Description

L'invention a trait au domaine de l'éclairage et/ou de la signalisation, notamment pour véhicules automobiles. Plus particulièrement, l'invention a trait à un procédé de contrôle d'un faisceau lumineux global émis par un projecteur de véhicule automobile et obtenu par l'addition de faisceaux intermédiaires réalisés par au moins deux moyens d'éclairage, ainsi qu'aux modules lumineux qui peuvent permettre la mise en oeuvre de tels procédés de contrôle.

Un véhicule automobile est équipé de projecteurs, ou phares, destinés à illuminer la route devant le véhicule, la nuit ou en cas de luminosité réduite. Ces projecteurs peuvent généralement être utilisés selon deux modes d'éclairage : un premier mode "feux de route" et un deuxième mode "feux de croisement". Le mode "feux de route" permet d'éclairer fortement la route loin devant le véhicule. Le mode "feux de croisement" procure un éclairage plus limité de la route, mais offrant néanmoins une bonne visibilité, sans éblouir les autres usagers de la route. Ces deux modes d'éclairage sont complémentaires. Le conducteur du véhicule doit manuellement changer de mode en fonction des circonstances, au risque d'éblouir par inadvertance un autre usager de la route. En pratique, le fait de changer de mode d'éclairage de façon manuelle peut manquer de fiabilité et s'avérer parfois dangereux. En outre, le mode feux de croisement procure une visibilité parfois insatisfaisante pour le conducteur du véhicule.

Pour améliorer la situation, des projecteurs dotés d'une fonction d'éclairage adaptatif (connue notamment sous l'acronyme anglais AFS pour "Adaptative Frontlighting System ") ont été proposés. Une telle fonction d'éclairage adaptatif est destinée à détecter de façon automatique, par exemple par le traitement d'image acquise par une caméra embarquée, un usager de la route susceptible d'être ébloui par un faisceau d'éclairage émis en mode feux de route par un projecteur, et à modifier le contour de ce faisceau d'éclairage de manière à créer une zone d'ombre à l'endroit où se trouve l'usager détecté. Les avantages d'une telle fonction d'éclairage adaptatif sont multiples : confort d'utilisation, meilleure visibilité par rapport à un éclairage en mode feux de croisement, meilleure fiabilité pour le changement de mode, risque d'éblouissement fortement réduit, conduite plus sûre.

Le document EP2280215 décrit un exemple de système d'éclairage pour projecteur de véhicule automobile, doté d'une fonction d'éclairage adaptatif. Le système comprend quatre éléments optiques primaires, dans chacun desquels trois sources de lumière sont associées à trois guides de lumière respectifs, ainsi que quatre éléments optiques secondaires de projection, en l'espèce des lentilles, respectivement associés aux quatre éléments optiques primaires. La lumière émise par chaque source de lumière pénètre dans le guide de lumière associé et elle sort par une extrémité de sortie du guide, de forme rectangulaire. La disposition des éléments optiques primaires et de leur élément optique secondaire associé fait que la lumière émise par chaque extrémité de sortie de guide optique est projetée par l'élément optique secondaire de manière à former à l'avant du véhicule un segment lumineux vertical. Les segments lumineux produits se superposent partiellement dans la direction horizontale. On joue alors sur l'actionnement des sources de lumières qui peuvent être allumées indépendamment l'une de l'autre, de façon sélective, pour obtenir l'éclairage souhaité et réaliser un faisceau de route non éblouissant pour les autres usagers de la route. Le faisceau est ainsi divisé en une pluralité de segments lumineux que l'on peut activer ou désactiver. Le faisceau d'éclairage adaptatif que l'on peut ainsi réaliser uniquement par contrôle électronique d'allumage des sources de lumière, et sans mouvement mécanique d'une pièce de cache additionnelle, est notamment connu sous l'appellation de faisceau matriciel.

On comprend qu'un tel procédé d'éclairage et/ou de signalisation et les modules lumineux utilisés ou étudiés jusqu'à présent à cet effet sont particulièrement avantageux pour le conducteur qui a une scène de route devant lui qui est mieux éclairée qu'avec un faisceau de type feux de croisement, et pour les autres usagers de la route qui ne risquent pas l'éblouissement. On peut toutefois constater que le fait d'éteindre les pixels correspondant à tel ou tel segment lumineux participe à une diminution d'intensité du flux lumineux global qui peut être obtenu avec un fonctionnement en feux de route.

L'invention a pour objectif de proposer une alternative aux procédés de contrôle de faisceaux lumineux tels que décrits précédemment, qui permette de réaliser la fonction de faisceau de route non éblouissant, sans cette diminution d'intensité du flux lumineux global.

Dans ce but, l'invention a pour objet un procédé de contrôle d'un faisceau lumineux global émis par un projecteur de véhicule automobile et formé de portions de faisceaux activables sélectivement, dans lequel on réalise la détection, sur une scène de route au voisinage du véhicule, d'un véhicule tiers susceptible d'être ébloui par ledit faisceau lumineux global, et on détermine une zone cible dans ledit faisceau global incluant ledit véhicule tiers, dans lequel on identifie alors des moyens d'éclairage portés par ledit projecteur qui réalisent les portions de faisceaux assurant l'éclairage de ladite zone cible, et dans lequel on pilote un déplacement desdits moyens d'éclairage identifiés dans la précédente étape, de manière à créer une zone de moindre éclairage correspondant à ladite zone cible, tout en maintenant allumés lesdits moyens d'éclairage.

Selon d'autres caractéristiques, lesdits moyens d'éclairage comportent des sources de lumière et des microsystèmes électromécaniques optiques associés respectivement à l'une des sources de lumière, chaque source de lumière étant commandée individuellement en allumage tandis que les microsystèmes électromécaniques sont commandés individuellement en déplacement.

Ainsi, tel que cela a pu être précisé auparavant, on parvient à améliorer les solutions connues par ailleurs en conservant intacte l'intensité lumineuse du faisceau global, puisque l'on n'éteint aucune des sources lumineuses du ou des modules lumineux et que l'on déplace latéralement les pixels correspondant à la zone sombre, plutôt que les éteindre.

Dans un mode de réalisation avantageux, lesdits microsystèmes électromécaniques sont pilotés individuellement en rotation. Et on prévoit que lesdits microsystèmes électromécaniques soient pilotés en rotation sur une plage angulaire étroite entre une position standard et une position de décalage, tandis que les sources de lumière associées sont maintenus allumées, de sorte que le faisceau émis par les sources de lumière et réfléchis par lesdits microsystèmes électromécaniques identifiés en position de décalage éclaire le voisinage de la zone cible.

On augmente ainsi l'intensité lumineuse au voisinage immédiat de cette zone cible, dans une zone où la visibilité est mauvaise du fait de l'éclairage des phares du véhicule croisant. Cela permet, par exemple, de mieux voir un conducteur de véhicule qui sort de son véhicule arrêté en cas de panne.

Ainsi, on permet un éclairage plus intense des bords de la zone cible, avec des sources de lumière qui conservent la même intensité lumineuse.

Le faisceau lumineux global peut consister en un faisceau de feux route non éblouissant, de type matriciel :
- le faisceau lumineux global peut être obtenu par un ensemble de moyens d'éclairage, chacun desdits moyens d'éclairage étant dédié à l'éclairage respectif d'une portion du faisceau lumineux global, et on pilote en déplacement un seul des moyens d'éclairage pour former ladite zone de moindre éclairage correspondant à ladite zone cible ;
- le faisceau lumineux global peut également être obtenu par l'addition de faisceaux intermédiaires réalisés respectivement par des ensembles distincts de moyens d'éclairage, et on pilote en déplacement un des moyens d'éclairage de chaque ensemble pour créer la zone de moindre éclairage correspondant à ladite zone cible. Par addition de faisceaux intermédiaires, on comprend que les faisceaux intermédiaires correspondants se recouvrent les uns les autres. Dans ce cas, on peut faire se déplacer un moyen d'éclairage d'un premier ensemble dans un premier sens et un moyen d'éclairage du deuxième ensemble dans un sens opposé.

Selon une caractéristique de l'invention, les portions de faisceaux consistent en des segments verticaux juxtaposés les uns aux autres, le déplacement des moyens d'éclairage générant le déplacement d'au moins un desdits segments et sa superposition sur d'autres segments du faisceau lumineux global.

L'invention concerne également un module lumineux pour la mise en oeuvre du procédé de contrôle tel que décrit. Le module comporte une source de lumière et des moyens de déviation optique, et il est caractéristique de l'invention que lesdits moyens de déviation optique soient montés mobiles. La source lumineuse est montée de façon immobile en permanence dans le module. On pourra prévoir un système optique pour l'émission d'un faisceau lumineux, les moyens de déviation optique étant alors intercalés entre le système optique et la source de lumière

Selon différentes caractéristiques du procédé de l'invention, prises seules ou en combinaison :
- le système optique consiste en un réflecteur et une lentille de projection ;
- la source de lumière comporte une pluralité de sources à semi-conducteurs ; ces sources à semi-conducteurs peuvent notamment être des diodes électroluminescentes, ou des diodes laser, associés à des pièces de phosphore ; dans ce dernier cas, les diodes laser sont disposées en amont des moyens de déviation optique tandis que les pièces de phosphore sont disposées entre les moyens de déviation optique et le système optique. On comprendra que d'autres agencements pourraient être prévus, sans sortir du contexte de l'invention : on pourrait par exemple avoir une diode laser, ou une diode électroluminescente de rayonnement bleu ou ultraviolet, qui soit en amont du microsystème électromécanique alors qu'un phosphore est déporté, et l'on pourrait également avoir une source blanche (formée par une diode électroluminescente bleue et du phosphore, ou bien par au moins une diode laser et du phosphore) qui est intégralement en amont des moyens de déviation optique.

Les moyens de déviation optique peuvent avantageusement consister en des microsystèmes électromécaniques optiques, montés mobiles en rotation entre une position standard dans laquelle lesdits systèmes sont aptes à dévier les rayons lumineux vers une première zone du système optique et une position décalage dans laquelle lesdits systèmes sont aptes à dévier les rayons lumineux vers une deuxième zone du système optique. Et les microsystèmes électromécaniques optiques peuvent alors être montés mobiles en rotation pour passer de ladite position standard à ladite position décalage, avec un angle de rotation compris entre 2° et 7°, les microsystèmes électromécaniques optiques utilisés ici ayant un angle de débattement d'environ +/- 7°.

Selon une caractéristique de l'invention, chaque microsystème électromécanique optique consiste en un miroir apte à dévier les rayons lumineux émis par la source de lumière et monté sur un microsystème électromécanique doté d'un axe de rotation et porté par le module.

Les microsystèmes électromécaniques peuvent être agencés en une matrice linéaire.

On peut prévoir qu'un dispositif optique primaire, notamment une lentille de collimation, soit disposé entre les sources de lumière et les moyens de déviation optique.

L'invention concerne en outre un système d'éclairage automobile comportant au moins un module lumineux, et avantageusement, il peut être prévu de disposer au moins un module lumineux dans un projecteur gauche du véhicule automobile et au moins un module lumineux dans un projecteur droit du véhicule, lesdits modules étant agencés de sorte que les faisceaux lumineux intermédiaires qu'ils génèrent s'additionnent pour générer un faisceau lumineux global.

Le système peut comporter en outre des moyens de détection du véhicule tiers sur une scène de route, des moyens d'analyse des informations de détection reçues et des moyens de calcul pour donner instruction de commande de déplacement des moyens de déviation optiques.

D'autres caractéristiques et avantages de la présente invention apparaitront plus clairement à l'aide de la description et des dessins parmi lesquels :
- la figure 1 est une représentation schématique, vue de côté, d'un module lumineux selon un premier mode de réalisation dans lequel sont ici rendus visibles une source de lumière, une lentille de collimation, des moyens de déviation optique, un réflecteur et une lentille de projection ;
- la figure 2 est une représentation schématique du module de la figure 1, vue de dessus, dans laquelle le réflecteur est rendu transparent pour faciliter la visibilité des moyens de déviation optique, et les axes de rotation des microsystèmes électromécaniques qui les composent ;
- la figure 3 est une représentation schématique semblable à celle de la figure 1, d'un module lumineux selon un deuxième mode de réalisation dans lequel sont ici rendus visibles une diode laser formant source de lumière spécifique à ce mode de réalisation, une lentille de collimation, des moyens de déviation optique, une pastille de phosphore associée à la diode laser, un réflecteur et une lentille de projection ; et
- les figures 4 et 5 sont des schémas illustrant le fonctionnement de l'invention dans lequel on fait pivoter des faisceaux intermédiaires pour modifier le faisceau lumineux global émis par un projecteur de véhicule automobile.

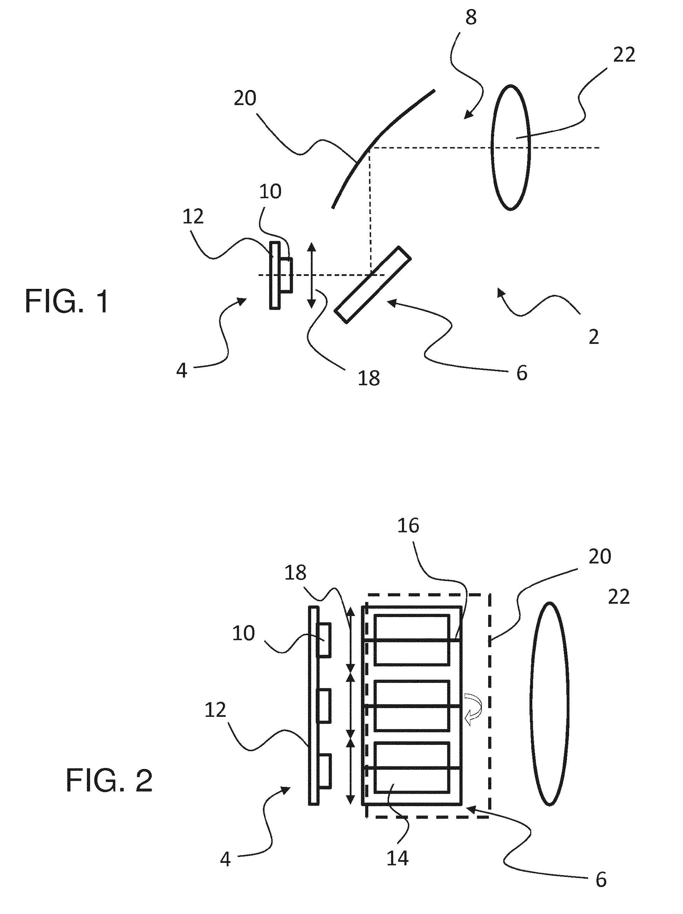

On va tout d'abord décrire un module lumineux pour l'éclairage et/ou la signalisation d'un véhicule automobile selon un premier mode de réalisation illustré sur les figures 1 et 2. Le module lumineux 2 comporte au moins une source de lumière 4 apte à émettre des rayons lumineux en direction de premiers moyens de déviation optique 6, et un système optique 8. En sortie du module, on réalise ainsi un faisceau intermédiaire, apte à être complété par addition d'autres faisceaux intermédiaires obtenus par d'autres modules lumineux disposés à proximité dans un même projecteur du véhicule automobile ou dans un autre projecteur.

Les différents composants des modules sont agencés de telle sorte que l'axe optique du module, correspondant à l'axe d'émission des rayons lumineux en sortie du module est sensiblement parallèle à l'axe principal d'émission des rayons en sortie de la source de lumière. Ici, l'axe optique du module est longitudinal. Dans la description qui va suivre, on utilisera le terme de plan optique pour définir le plan vertical comportant l'axe optique, étant observé que le plan optique correspond au plan de la feuille dans l'illustration de la figure 1.

Chaque source de lumière consiste ici en une source à semi-conducteurs, et par exemple une diode électroluminescente, qui peut être associée à une carte de circuits imprimés et à un radiateur pour le refroidissement des composants électroniques portés par ladite carte.

Tel que cela est visible sur la figure 2, le module comporte trois diodes électroluminescentes 10 distinctes rapportées sur une carte commune 12 de circuits imprimés. Il sera compris que d'autres configurations, en nombre, en agencement géométrique, pourront être choisies sans sortir du contexte de l'invention.

Les premiers moyens de déviation optique 6 consistent en une pluralité de microsystèmes électromécaniques (connus sous l'acronyme MEMS pour la traduction anglaise " MicroElectroMechanical Systems "), agencés en matrice ligne de telle sorte que chacun de ces microsystèmes électromécaniques soit disposé en regard d'une diode électroluminescente (ou d'un " chip lumineux " de la diode). Les microsystèmes électromécaniques s'étendent longitudinalement en avant des sources lumineuses, et ils consistent en des miroirs 14 mobiles aptes à réfléchir une partie des rayons lumineux émis par la source de lumière.

Dans une variante de réalisation, chaque miroir est monté mobile en rotation autour d'un axe 16 porté par le module, de manière à pivoter entre deux positions extrêmes, à savoir une première position standard et une deuxième position de décalage optique. Pour une diode centrée sur l'axe optique et le microsystème électromécanique associé également centré sur l'axe optique, on distingue ces deux positions extrêmes, obtenues par butée mécanique de la rotation de l'axe, en ce que la première position standard est calibrée pour que les rayons réfléchis par le miroir ainsi orienté impactent le système optique disposé en aval sensiblement dans le plan optique, tandis que la deuxième position de décalage optique est calibrée pour que les rayons réfléchis par le miroir ainsi orienté impactent le système optique à une distance du plan optique correspondant à la largeur souhaitée des segments lumineux composant le faisceau lumineux intermédiaire.

Dans la première position standard, le miroir s'étend dans un plan perpendiculaire au plan optique et comportant l'axe transversal, tandis que dans la deuxième position de décalage, le miroir est incliné par rapport à cet axe transversal. A cet effet, pour passer de l'une à l'autre des positions extrêmes, l'axe de rotation des miroirs s'inscrit dans le plan optique et forme avec l'axe optique sensiblement un angle de 45°.

On comprend que lorsque tous les miroirs sont dans la même position, que ce soit dans la position standard ou dans la position de décalage, on obtient des faisceaux complémentaires réguliers, avec des segments le composant disposés à intervalles réguliers, un décalage transversal du faisceau intermédiaire étant réalisé entre un premier agencement des moyens de déviation optique dans lequel tous les miroirs sont dans la position standard et un deuxième agencement des moyens de déviation optique dans lequel tous les miroirs sont dans la position de décalage. Par contre, si l'un seulement des miroirs des moyens de déviation optique est pivoté dans la position décalée, le faisceau complémentaire n'est plus régulier, et un segment du faisceau matriciel vient en recouvrement d'un autre.

On observe que la matrice de microsystèmes électromécaniques selon l'invention a un fonctionnement différent de celui d'autres matrices connues par ailleurs, comme dans un système DLP® par exemple. Alors que dans de tels systèmes, la lumière réfléchie par les miroirs est soit dirigée vers l'optique de projection lorsque les miroirs sont dans la position standard, soit dirigée vers une surface non réfléchissante lorsque les miroirs sont dans la position de décalage, de manière à former un système on/off dans lequel on assombrit certaines parties de l'image, la matrice selon l'invention ne génère pas d'extinction de partie du faisceau, mais uniquement un déplacement de telle ou telle partie.

Cela est notamment dû à la plage angulaire de rotation choisie avantageusement étroite, de l'ordre de 2° à 7°, qui permet que dans l'une ou l'autre des positions extrêmes, la lumière réfléchie par les miroirs est dirigée intégralement vers le dispositif de projection disposé en aval sur le trajet des rayons lumineux. Dans leur position standard, les moyens de déviation optiques sont aptes à dévier les rayons lumineux vers une première zone du système optique et dans leur position de décalage, les mêmes moyens de déviation sont aptes à dévier les rayons lumineux vers une deuxième zone du système optique.

Il est en outre particulièrement intéressant de noter que les microsystèmes utilisés dans l'invention ne sont pas binaires. On entend par là que l'angle de rotation peut être choisie indifféremment dans la plage angulaire de +/- 7°, sans être limité à l'une ou l'autre des positions extrêmes, par des instructions de commande de tension ou de courant selon le type de microsystèmes choisis, à commande électrostatique, piézoélectrique ou magnétique par exemple.

Eventuellement une optique primaire est disposée entre les premiers moyens de déviation optique et la source de lumière, en complément du système optique disposé en sortie du module, pour améliorer l'efficacité et éviter les recouvrements de faisceaux. Cette optique primaire peut être une lentille de collimation 18.

Le système optique 8 est disposé en sortie du module sur le trajet des rayons lumineux émis par la diode électroluminescente 10 et déviés par les microsystèmes électromécaniques 14. Tel qu'illustré, le système optique comporte un réflecteur 20 et une lentille de projection 22. On comprendra que d'autres agencements de système optique peuvent être mis en place sans sortir du contexte de l'invention.

Le module comporte en outre des moyens de détection sur la scène de route éclairée d'un véhicule à ne pas éblouir, des moyens d'analyse de toute information transmise par ces moyens de détection, ainsi que des moyens de commande des sources lumineuses et des microsystèmes électromécaniques. Ces moyens de commande peuvent permettre d'allumer, éteindre ou modifier l'intensité lumineuse émise par chaque source de lumière de chaque module, tandis que les moyens de détection peuvent consister par exemple en une caméra tournée vers la scène de route s'étendant devant le véhicule, et en des moyens de traitement d'image associés, qui permettent l'élaboration d'une information de détection que le module de détection est apte à envoyer aux moyens de commande pour l'allumage, la rotation des microsystèmes électromécaniques étant généré par les moyens de commande en fonction de cette information de détection.

Un module lumineux 2 tel qu'il vient d'être décrit permet la mise en oeuvre du procédé de contrôle d'un faisceau lumineux global émis par un projecteur de véhicule automobile et obtenu par l'addition de faisceaux intermédiaires réalisés par au moins deux moyens d'éclairage selon l'invention.

Dans un premier temps, des rayons lumineux sont émis par les diodes 10 du module 2 lorsque le module de commande reçoit une information relative à la détection automatique des conditions de roulage en feux route ou une information relative à une commande du conducteur.

Les rayons sont dirigés sensiblement parallèlement à l'axe optique vers les microsystèmes électromécaniques formés de miroirs mobiles 14 qui se trouvent dans la première position standard, et il en résulte un faisceau intermédiaire de type " feux de route ", divisé en un nombre de segments égal au nombre de diodes et de miroirs.

Lorsque les moyens de détection envoient une information au module de commande relative à la présence d'un véhicule sur la scène de route éclairée par le faisceau préalablement réalisé, le module de commande identifie quelle est la zone cible, c'est-à-dire la zone dans laquelle ledit véhicule détecté est présent, et il détermine quelles sont les diodes et le microsystème électromécanique associé qui réalisent l'éclairage dans cette zone.

Au lieu d'éteindre les diodes correspondantes, ou de faire pivoter les microsystèmes électromécaniques d'un angle tel que les rayons déviés ne rencontrent plus par la suite le dispositif de projection, on favorise ici la continuité de l'allumage de la diode et une rotation de quelques degrés seulement du miroir. Les rayons lumineux déviés par un miroir représentent un segment lumineux, ici vertical, du faisceau intermédiaire et la rotation de quelques degrés d'un miroir génère un déplacement transversal du segment lumineux correspondant.

On peut prévoir une utilisation de ce procédé de contrôle avec un faisceau global segmenté obtenu directement par un module lumineux, sans addition de faisceaux intermédiaires segmentés, et l'on comprend alors que le déplacement transversal d'un segment lumineux du faisceau permet la création d'une zone cible permettant le non éblouissement d'un véhicule détecté, avec un éclairage plus important d'un côté de la zone cible, dans le sens dans lequel a été déplacé le segment lumineux. Et on comprend qu'il convient de piloter la rotation des miroirs mobiles du module lumineux d'une distance suffisante pour que le segment lumineux se déplace transversalement de la longueur égale à celle de la zone cible.

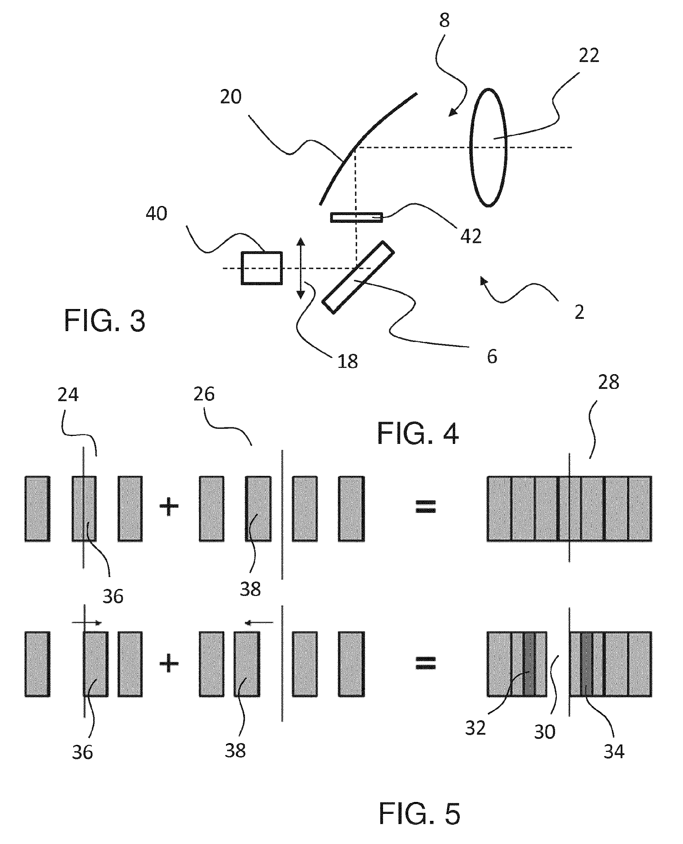

On a illustré sur les figures 4 et 5 un mode de réalisation avantageux dans lequel le faisceau lumineux global obtenu par l'addition de deux faisceaux lumineux intermédiaires complémentaires, dans le cas d'un ensemble d'éclairage de véhicule automobile dans lequel deux modules lumineux tels qu'ils viennent d'être décrits sont logés en série dans un projecteur dont le faisceau lumineux global est représenté à droite des figures, résultant de l'addition des faisceaux intermédiaires des deux modules représentés à gauche des figures.

La figure 4 illustre un faisceau lumineux projeté sur un mur vertical et correspondant à un état standard dans lequel aucun véhicule n'est détecté. Un premier module comporte trois diodes, et lorsque celles-ci sont allumées, il se forme, par réflexion de la lumière émise sur les moyens de déviation optique notamment, un premier faisceau intermédiaire 24 composé de trois segments espacés l'un de l'autre, selon la direction transversale, d'un premier intervalle déterminé d1. Un deuxième module comporte lui quatre diodes, et lorsque celles-ci sont allumées, il se forme un deuxième faisceau intermédiaire 26 composé de quatre segments espacés l'un de l'autre, selon la direction transversale, d'un deuxième intervalle déterminé d2. Les modules sont orientés par rapport à l'axe optique du véhicule, de manière à ce que, par addition des deux faisceaux intermédiaires, il se forme un faisceau global 28 composé d'une succession de segments, étant entendu que les segments du premier faisceau intermédiaire ont une largeur égale au deuxième intervalle d2 pour venir se loger entre les segments du deuxième faisceau intermédiaire et qu'inversement les segments du deuxième faisceau intermédiaire ont une largeur égale au premier intervalle d1 pour venir se loger entre les segments du premier faisceau intermédiaire. Tel qu'illustré, on peut prévoir que les segments aient tous la même dimension et que les intervalles entre les segments soient les mêmes d'un faisceau intermédiaire à l'autre.

Il convient de noter que selon l'invention, la largeur des segments peut varier d'un segment à l'autre selon qu'ils soient positionnés au centre du faisceau ou sur les bords. Les segments centraux sont ainsi prévus plus étroits que les segments latéraux. Dans le même ordre d'idée d'un agencement non homogène selon la position des segments, les intervalles entre les segments d'un sous-faisceau peuvent varier, et les angles de rotation des segments peuvent différer d'un segment à l'autre.

Egalement, on peut prévoir que les segments du bord soient fixes et qu'ils soient pilotés simplement en extinction ou en allumage. On évite ainsi de devoir gérer un angle de rotation de valeur élevée pour leur déplacement, compliqué à mettre en oeuvre, alors que ce déplacement peut ne pas se justifier compte tenu de la position du segment sur la route. Le système peut donc combiner des segments qui se déplacent et des segments fixes.

La figure 5 illustre un état dans lequel un véhicule a été détecté et dans lequel on cherche à créer dans le faisceau lumineux global 28 une zone cible 30 dans laquelle aucun rayon lumineux potentiellement éblouissant n'est formé. A cet effet, le premier faisceau intermédiaire 24 est modifié par décalage transversal d'un segment lumineux dans un premier sens transversal, tandis que le deuxième faisceau intermédiaire 26 est modifié par décalage transversal d'un segment lumineux dans le sens transversal opposé. Ceci permet, tel que cela est visible sur la figure, de ne prévoir un déplacement des segments uniquement sur la moitié de l'intervalle prévu entre les segments de chaque faisceau intermédiaire. Et cela permet en outre un éclairage de chaque côté de la zone cible. Lors de l'addition des faisceaux intermédiaires, une moitié du segment déplacé dans un faisceau intermédiaire vient en superposition d'une moitié d'un segment resté fixe dans l'autre faisceau intermédiaire. Il peut ainsi être observé sur la figure 5, deux zones plus sombres 32 et 34 disposées de part et d'autre de la zone cible 30, la zone 32 étant ici obtenue par la superposition du segment 38 et d'un segment resté fixe du faisceau 24 tandis que la zone 34 est obtenue par superposition du segment 36 et d'un segment resté fixe du faisceau 26.

Un deuxième mode de réalisation de l'invention est illustré sur la figure 3. Le module diffère de ce qui a été décrit dans le deuxième mode de réalisation en ce que les sources de lumières sont formées par une série de sources laser 40, auxquelles on associe des pastilles de phosphore 42, pour la formation d'une lumière blanche réglementaire. Les moyens de déviation optique restent inchangés et les rayons lumineux qu'ils dévient, que ce soit dans leur position standard ou leur position de décalage, sont dirigés vers les pastilles de phosphore, disposées entre les moyens de déviation optique et le réflecteur du système optique. On comprend que le procédé est le même dans le cas de ce deuxième mode de réalisation.

On pourra prévoir en variante de chacun des deux modes de réalisation décrits ci-dessus, et plus généralement dans une variante avantageuse de l'invention, que chaque microsystème électromécanique a deux positions décalées de part et d'autre de la position standard, de sorte que le microsystème électromécanique peut être pivoté dans un sens ou dans l'autre depuis la position standard. Le module de commande détermine en fonction des conditions de roulage (conduite à gauche ou à droite, véhicule à ne pas éblouir suivi ou croisé,...) dans quel sens le miroir est pivoté. Il peut ainsi être dit que les microsystèmes électromécaniques sont mobiles entre trois positions et non plus entre deux positions. Les microsystèmes ont dans ce cas une position standard centrale et deux positions extrêmes obtenues par un décalage positif ou négatif de part et d'autre de cette position standard. Dans ce cas, les deux positions extrêmes prévues de part et d'autre de la position standard sont calibrées pour que les rayons réfléchis par le miroir ainsi orienté impactent le système optique à une distance du plan optique correspondant à la moitié de la largeur souhaitée des segments lumineux composant le faisceau lumineux intermédiaire.

On observe que dans ce cas, pour pouvoir se permettre de déplacer le segment de seulement la moitié de sa largeur, celui-ci doit avoir une largeur double de celle de la zone où on veut créer une ombre. Cela peut conduire à devoir créer une ombre deux fois trop large, dans le cas d'un véhicule centré sur deux segments. Il est alors possible de garder le déplacement d'un demi-segment en prévoyant de faire pivoter globalement le module afin de centrer l'ombre sur le véhicule. On note que dans le cas de la présence de plusieurs véhicules sur la scène de route, il sera intéressant de donner la priorité au véhicule le plus central dans le faisceau pour piloter ce pivotement global.

Selon une autre variante de l'invention, on pourra prévoir, notamment dans le cas d'un « pixel lighting », que le déplacement puisse être horizontal ou vertical. Tel que cela a pu être décrit précédemment, le déplacement horizontal d'une partie de faisceau est fait sur chaque segment individuellement, et il est intéressant de noter que le déplacement vertical est lui effectué sur le module dans son ensemble. On peut utiliser pour cela des microsystèmes électromécaniques contrôlables sur deux axes perpendiculaires. Avec de tels dispositifs, la lumière de la zone à éteindre peut être « éjectée » aussi bien latéralement, ce qui est préférable pour les zones au voisinage de l'horizon, que verticalement, vers le haut ou le bas, ce qui peut être plus intéressant pour des zones situées en hauteur.

La description qui précède explique clairement comment l'invention permet d'atteindre les objectifs qu'elle s'est fixés et notamment de proposer un procédé de contrôle de faisceaux lumineux intermédiaire qui permette la réalisation d'un faisceau de route non éblouissant, sans déperdition d'intensité lumineuse au global, et avec avantageusement un éclairage plus intense des bords immédiats de la zone rendue sombre pour éviter l'éblouissement du véhicule venant en sens inverse ou roulant devant.

## Revendications

1. Procédé de contrôle d'un faisceau lumineux global (28) émis par un projecteur de véhicule automobile et formé de portions de faisceaux (36) activables sélectivement, dans lequel on réalise la détection, sur une scène de route au voisinage du véhicule, d'un véhicule tiers susceptible d'être ébloui par ledit faisceau lumineux global, et on détermine une zone cible (30) dans ledit faisceau global incluant ledit véhicule tiers, dans lequel on identifie alors des moyens d'éclairage (4, 6) portés par ledit projecteur qui réalisent les portions de faisceaux assurant l'éclairage de ladite zone cible, et dans lequel on pilote un déplacement desdits moyens d'éclairage identifiés dans la précédente étape, de manière à créer une zone de moindre éclairage correspondant à ladite zone cible, tout en maintenant allumés lesdits moyens d'éclairage.

2. Procédé de contrôle selon la revendication 1, **caractérisé en ce que** lesdits moyens d'éclairage comportent des sources de lumière (4) et des moyens de déviation optiques (6) associés respectivement à au moins l'une des sources de lumière, chaque source de lumière étant commandée individuellement en allumage tandis que lesdits moyens de déviation optique sont commandés individuellement en déplacement.

3. Procédé de contrôle selon la revendication 2, **caractérisé en ce que** lesdits moyens de déviation optique (6) sont pilotés individuellement en rotation.

4. Procédé de contrôle selon la revendication 3, **caractérisé en ce que** lesdits moyens de déviation optique (6) consistent en des microsystèmes électromécaniques pilotés en rotation sur une plage angulaire étroite entre une position standard et une position de décalage, tandis que les sources de lumière (4) associées sont maintenus allumées, de sorte que le faisceau lumineux émis par les sources de lumière et réfléchis par lesdits microsystèmes électromécaniques identifiés en position de décalage éclairent le voisinage de la zone cible.

5. Procédé de contrôle selon l'une des revendications précédentes, **caractérisé en ce que** le faisceau lumineux global consiste en un faisceau de feux route non éblouissant, de type faisceau matriciel.

6. Procédé de contrôle selon la revendication précédente, dans lequel le faisceau lumineux global (28) est obtenu par un ensemble de moyens d'éclairage (4, 6), chacun desdits moyens d'éclairage étant dédié à l'éclairage respectif d'une portion du faisceau lumineux global, et dans lequel on pilote en déplacement un seul des moyens d'éclairage pour former ladite zone de moindre éclairage correspondant à ladite zone cible (30).

7. Procédé de contrôle selon la revendication 5, dans lequel le faisceau lumineux global (28) est obtenu par l'addition de faisceaux intermédiaires (24, 26) réalisés respectivement par des ensembles distincts de moyens d'éclairage (4, 6), et dans lequel on pilote en déplacement un des moyens d'éclairage de chaque ensemble pour créer la zone de moindre éclairage correspondant à ladite zone cible (30).

8. Procédé de contrôle selon la revendication précédente, dans lequel on fait se déplacer un moyen d'éclairage (4, 6) d'un premier ensemble dans un premier sens et un moyen d'éclairage (4, 6) du deuxième ensemble dans un sens opposé.

9. Procédé selon l'une des revendications précédentes, dans lequel les portions de faisceaux (36) consistent en des segments verticaux juxtaposés les uns aux autres, le déplacement des moyens d'éclairage générant le déplacement d'au moins un desdits segments et sa superposition sur d'autres segments du faisceau lumineux global.

10. Module lumineux pour la mise en oeuvre du procédé de contrôle selon l'une des revendications précédentes, comportant une source de lumière (4) et des moyens de déviation optique (6) montés mobiles.

11. Module lumineux selon la revendication 10, **caractérisé en ce qu'**il comporte en outre un système optique (8) pour l'émission d'un faisceau lumineux, les moyens de déviation optique (6) étant intercalés entre la source de lumière et le système optique.

12. Module selon l'une des revendications 10 à 11, **caractérisé en ce que** les moyens de déviation optique (6) consistent en des microsystèmes électromécaniques optiques (14, 16), montés mobiles en rotation entre une position standard dans laquelle lesdits systèmes sont aptes à dévier les rayons lumineux vers une première zone du système optique (8) et une position décalage dans laquelle lesdits systèmes sont aptes à dévier les rayons lumineux vers une deuxième zone du système optique (8).

13. Module selon la revendication 12, **caractérisé en ce que** les microsystèmes électromécaniques optiques sont montés mobiles en rotation pour passer de ladite position standard à ladite position décalage, avec un angle de rotation compris entre 2° et 5°.

14. Module selon la revendication 12 ou 13, **caractérisé en ce que** chaque microsystème électromécanique optique consiste en un miroir (14) apte à dévier les rayons lumineux émis par la source de lumière et monté sur un axe (16) de rotation porté par le module.

15. Système d'éclairage automobile comportant au moins un module lumineux selon l'une des revendications 10 à 14.

16. Système d'éclairage selon la revendication précédente, **caractérisé en ce qu'**au moins un module lumineux selon l'une des revendications 10 à 14 est disposé dans un projecteur gauche du véhicule automobile et **en ce qu'**au moins un module lumineux selon l'une des revendications 10 à 14 est disposé dans un projecteur droit du véhicule, lesdits modules étant agencés de sorte que les faisceaux lumineux intermédiaires (24, 26) qu'ils génèrent s'additionnent pour former un faisceau lumineux global (28).
